# FASCICULE DE BREVET EUROPEEN

(11) **EP 2 895 340 B1**
(45) Date de publication et mention de la délivrance du brevet: **03.05.2017**
(21) Numéro de dépôt: 13759526.0
(22) Date de dépôt: 10.09.2013
(51) Int. Cl.: B60C 13/00

(54) **PNEUMATIQUE COMPORTANT UN MOTIF A FORT CONTRASTE COMPRENANT UNE PLURALITE DE CAVITES**
REIFEN MIT EINEM MUSTER MIT HOHEM KONTRAST UND MEHREREN HOHLRÄUMEN
TYRE COMPRISING A HIGH CONTRAST PATTERN COMPRISING A PLURALITY OF CAVITIES

(30) Priorité: 12.09.2012 FR 1258550
(43) Date de publication de la demande: 22.07.2015
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: MUHLHOFF, Olivier, F-63040 Clermont-Ferrand Cedex 9 (FR); DESVIGNES, Jean-Claude, F-63040 Clermont-Ferrand Cedex 9 (FR); PATURLE, Antoine, F-63040 Clermont-Ferrand Cedex 9 (FR)
(74) Mandataire: Demaure, Pierre-Yves
(86) Numéro de dépôt international: PCT/EP2013/068666
(87) Numéro de publication internationale: WO 2014/040967

(56) Documents cités:
- EP-A1- 0 522 781
- DE-A1-102009 043 900
- DE-A1-102010 050 077
- US-A1- 2012 118 466

## Description

### DOMAINE DE L'INVENTION

La présente invention concerne un pneumatique pour véhicule automobile comportant un motif à fort contraste comprenant une pluralité de cavités, elle concerne également au moins un procédé pour la réalisation d'un tel motif.

### ETAT DE LA TECHNIQUE

Les flancs des pneumatiques présentent une grande quantité de motifs destinés d'une part à donner des informations techniques et légales, et d'autre part à permettre aux consommateurs de distinguer l'origine du produit.

Il est constant d'essayer d'améliorer la visibilité et la lisibilité de ces motifs sur les flancs des pneumatiques.

Le document EP0522781 divulgue un pneumatique comprenant un flanc et un motif formé sur ce flanc. Le motif comprend une pluralité d'ouvertures et des zones intermédiaires séparant ces ouvertures.

Le document DE102009043900 présente un pneumatique comprenant un flanc et un motif formé sur ce flanc. Le motif comporte une rugosité particulière en vue d'améliorer le contraste de ce motif avec le flanc.

Le document WO2007/045425 décrit un motif à fort contraste comportant une pluralité de brins dont la section diminue en allant de la base de chaque brin vers l'extrémité dudit brin. La densité des brins du motif est au moins égale à cinq brins par unité de surface du motif exprimée en millimètre carré (mm²).

L'effet de ces brins est de « piéger » une grande quantité des rayons lumineux incidents qui rencontrent le motif. Ceci permet de donner un aspect plus noir au motif par rapport au reste du flanc du pneumatique. Les brins permettent d'obtenir également un toucher particulièrement agréable, de type « velours ».

Cependant, un motif comportant de tels brins peut être relativement fragile à certaines agressions mécaniques, comme à des frottements avec un trottoir. Sous l'effet de ces frottements, les brins du motif peuvent se désolidariser du pneumatique.

Il existe donc un besoin de proposer un motif à fort contraste dont le contraste avec un flanc du pneumatique présente une plus grande pérennité.

### DEFINITIONS

Par « pneumatique », on entend tous les types de bandages élastiques soumis à une pression interne ou non.

Par « bande de roulement » d'un pneumatique, on entend une quantité de matériau caoutchoutique délimitée par des surfaces latérales et par deux surfaces principales dont l'une est destinée à entrer en contact avec une chaussée lorsque le pneumatique roule.

Par « bourrelet » d'un pneumatique, on entend une partie du pneumatique destinée à prendre assise sur une jante de roue.

Par « flanc » d'un pneumatique, on entend une surface latérale du pneumatique disposée entre la bande de roulement du pneumatique et un bourrelet de ce pneumatique.

Par « motif » sur un flanc, on entend un ensemble d'ouvertures et des zones intermédiaires séparant ces ouvertures. Les ouvertures sont en creux sur le flanc et les zones intermédiaires sont formées par de la matière caoutchoutique.

Par « diamètre équivalent » d'une ouverture d'une cavité respectivement d'une base d'une protubérance, on entend le diamètre du cercle inscrit dans cette ouverture, respectivement dans cette base.

Par « moule », on entend un ensemble d'éléments de moule séparés qui, par rapprochement relatif, permettent de délimiter un espace de moulage toroïdal.

Par « marquage » dans un moule, on entend une pluralité de protubérances faisant saillie à partir de ce moule et des parties intermédiaires du moule séparant ces protubérances.

### RESUME DE L'INVENTION

L'invention concerne un pneumatique en matériau caoutchoutique comprenant un flanc et un motif formé sur ce flanc. Le motif comprend une pluralité d'ouvertures et des zones intermédiaires séparant ces ouvertures. Afin que le motif puisse faire contraste avec le flanc, il est prévu que les ouvertures occupent au moins 60% du motif, ces ouvertures étant réparties dans le motif selon une densité au moins égale à cinq ouvertures par millimètre carré (mm²), ces ouvertures présentant des diamètres équivalents compris entre 0,03 mm et 0,5 mm. Les ouvertures sont circulaires et ces ouvertures se prolongent dans la profondeur du flanc pour former des cavités et tout ou partie de ces cavités a une section qui diminue dans la profondeur de ce flanc. En outre, tout ou partie des cavités a une profondeur comprise entre 0,2 mm et 0,6 mm.

Grâce à l'invention, il est possible de créer un motif faisant contraste par rapport au flanc du pneumatique tout en présentant une plus grande pérennité. En effet, comme le motif est composé d'ouvertures qui sont en creux sur le flanc, l'impact des frottements d'un trottoir sur le motif est faible. On améliore ainsi la pérennité du motif sur ce flanc. En outre, avec une profondeur comprise entre 0,2 mm et 0,6 mm, on s'assure qu'une grande quantité de rayons lumineux incidents qui rencontre le motif est piégée par ce motif. De plus, comme la profondeur des cavités est limitée, on évite de trop dégrader la résistance mécanique du flanc.

Préférentiellement, les ouvertures occupent au moins 70% du motif, au moins 80% du motif, au moins 90% du motif ou au moins 95% du motif.

Plus le taux d'occupation des ouvertures dans le motif est important, meilleure est la qualité de contraste de ce motif par rapport au flanc.

Dans une variante de réalisation, tout ou partie des ouvertures a une forme polygonale.

De cette manière, il est possible d'organiser plus facilement les ouvertures les unes par rapport aux autres de sorte à limiter la surface des zones intermédiaires entre ces ouvertures. Avec une telle forme d'ouvertures, on peut arriver plus aisément à des taux conséquents d'occupation des ouvertures.

Dans un mode de réalisation préférentiel, tout ou partie des cavités a au moins une paroi qui, selon une vue en coupe, forme un angle α compris entre 10° et 45°, par rapport à une direction Z perpendiculaire au motif.

A chaque fois qu'un rayon lumineux rencontre une paroi de la cavité, celui-ci est réfléchi par ladite paroi. La direction de réflexion du rayon lumineux dépend de la direction initiale de ce rayon lumineux et de l'angle d'inclinaison de la paroi. Ainsi, en fonction de cette direction initiale et de cet angle d'inclinaison, le rayon lumineux peut être renvoyé vers une autre paroi de la cavité. A l'inverse, le rayon lumineux peut être renvoyé à l'extérieur de la cavité, par exemple directement vers un observateur. Dans le premier cas, le rayon lumineux « se perd » dans la cavité et il ne sera plus perceptible par l'oeil d'un observateur. Dans le second cas, l'observateur peut percevoir le rayon lumineux et le motif peut apparaître alors comme étant plus clair et donc moins en contraste vis-à-vis du flanc. En choisissant une cavité ayant au moins une paroi qui forme un angle α compris entre 10° et 45°, on s'assure qu'une grande partie des rayons lumineux rentrant dans la cavité va être absorbée par cette cavité sous l'effet de réflexions multiples à l'intérieur de la cavité. De cette manière, on améliore le contraste du motif par rapport au flanc tout en conservant le même taux d'occupation des cavités dans ce motif. En outre, avec cette inclinaison de paroi, on améliore globalement la résistance du motif, notamment lors de frottements répétés avec un trottoir.

### BREVE DESCRIPTION DES DESSINS

D'autres caractéristiques et avantages de l'invention ressortiront de la description suivante, donnée à titre d'exemple, sans caractère limitatif, en regard des dessins annexés sur lesquels :
- la **figure 1** représente schématiquement un flanc d'un pneumatique et un motif faisant contraste par rapport à ce flanc ;
- la **figure 2** représente schématiquement un premier mode de réalisation du motif de la **figure 1** ;
- la **figure 3** représente schématiquement un second mode de réalisation du motif de la **figure 1**, ce mode de réalisation étant exclu de la présente invention ;
- la **figure 4** représente schématiquement une vue en coupe du motif de la **figure 1** selon un troisième mode de réalisation;
- la **figure 5** représente une vue agrandie d'une cavité de la **figure 4** ;
- la **figure 6** représente schématiquement une vue en perspective d'une partie d'un moule apte à mouler le motif de la **figure 4** ;
- la **figure 7** représente schématiquement un dispositif pour la réalisation du motif de la **figure 4** sur le flanc du pneumatique de la **figure 1**, après la vulcanisation de ce pneumatique.

Dans la description qui va suivre, des éléments sensiblement identiques ou similaires seront désignés par des références identiques.

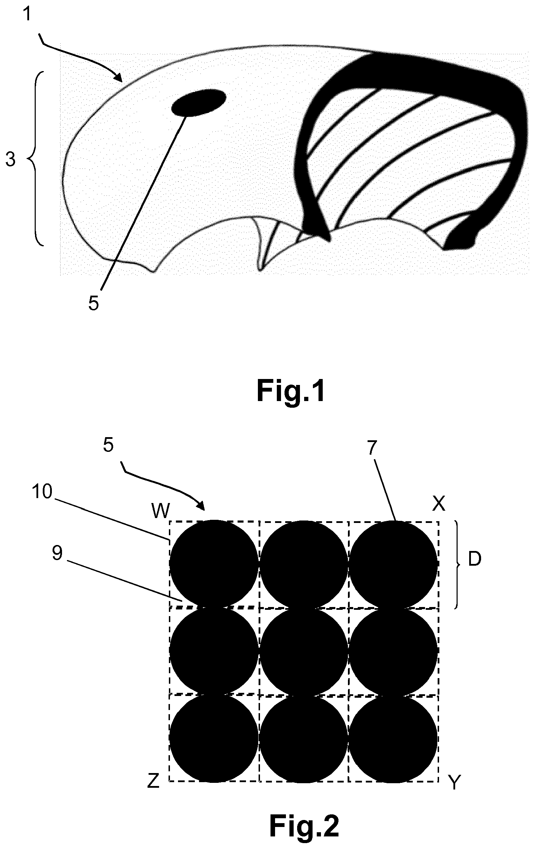

La **figure 1** est une vue partielle d'un pneumatique 1 conformément à l'invention. Plus particulièrement, la **figure 1** représente un flanc 3 de ce pneumatique et un motif 5 formé sur ce flanc 3. Le flanc 3 présente un état de surface globalement lisse qui lui confère une grande capacité à réfléchir les rayons lumineux incidents. Ainsi dans des conditions courantes de luminosité, le flanc sera perçu par un observateur comme globalement brillant.

Le motif 5 a, quant à lui, un aspect noir et mat qui fait contraste avec le flanc 3.

La **figure 2** représente une premier mode de réalisation du motif de la **figure 1**. Dans ce mode de réalisation, le motif 5 comporte une pluralité de cavités s'étendant dans la profondeur du flanc 3. Ces cavités débouchent sur le flanc en formant des ouvertures circulaires 7 de diamètre D. Le motif comprend également des zones intermédiaires 9 séparant les ouvertures 7. Chaque ouverture 7 peut être inscrite dans un carré 10 dont les côtés (tracés ici en pointillés) ont la même longueur que le diamètre D des ouvertures. Les segments WX, XY, YZ, ZW qui s'appuient sur une partie des côtés des carrés 10, délimitent le motif 5. Le motif 5 a ici une forme carrée.

Il est possible de déterminer un taux d'occupation des ouvertures dans le motif 5. Ce taux d'occupation correspond au rapport de l'aire occupée par ces ouvertures sur l'aire totale du motif. Dans l'exemple de la **figure 2**, les 9 ouvertures 7 occupent une aire correspondant à 9*π*D²/4 et l'aire du motif correspond à 9*D². Le taux d'occupation des ouvertures est donc de π/4 soit 78,5%.

On notera que les ouvertures sont réparties dans le motif selon une densité au moins égale à cinq ouvertures par millimètre carré et ces ouvertures présentent des diamètres compris entre 0,03 mm et 0,5 mm. Bien entendu, il est possible de sélectionner la densité des ouvertures et/ou leur diamètre dans ces plages de valeurs de sorte à atteindre le taux d'occupation désiré, tel qu'un taux d'occupation supérieur ou égal à 60%, 70%, 80%, 90%, voire 95%.

On notera également que les ouvertures 7 se touchent ici de sorte à minimiser la surface de flanc présente entre les ouvertures.

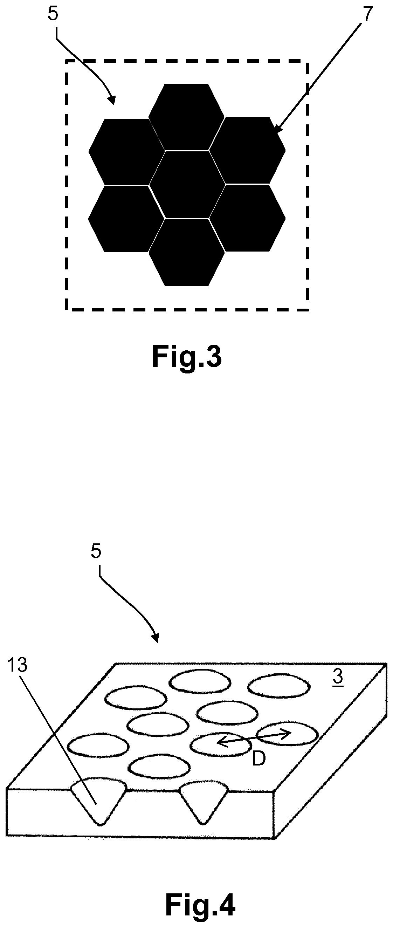

La **figure 3** représente une seconde variante de réalisation du motif 5 dans laquelle les ouvertures 7 ont une forme polygonale. Plus précisément, les ouvertures forment ici des hexagones.

Avec une telle forme d'ouverture, il est possible d'organiser plus facilement les ouvertures les unes par rapport aux autres dans le but de diminuer la surface des zones intermédiaires entre les ouvertures. On peut ainsi arriver plus facilement à des taux importants d'occupation des ouvertures dans le motif. Ce mode de réalisation est exclu de la présente invention.

La **figure 4** représente une vue en coupe partielle d'un motif selon un troisième mode de réalisation. Dans cette variante, les cavités 13 forment un tronc de cône dans la profondeur du flanc 3. De cette manière, on améliore le contraste du motif par rapport au flanc. On notera que dans ce mode de réalisation, les ouvertures 7 des cavités 13 ne se touchent pas. En outre, les ouvertures sont régulièrement réparties sur le flanc de sorte que la distance D entre chaque ouverture 7 du motif 5 est la même.

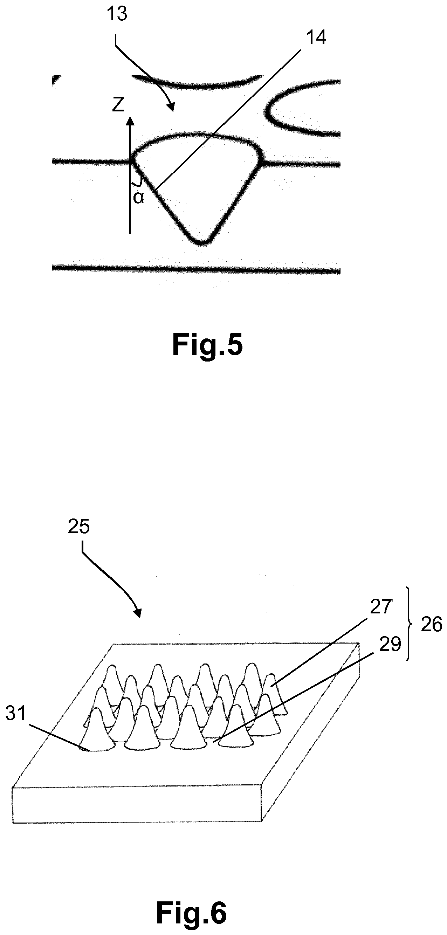

La **figure 5** représente un agrandissement de la cavité 13 de la **figure 4**. Sur cette figure, la cavité présente des parois 14. Chaque paroi forme un angle α compris entre 10° et 45°, par rapport à une direction Z perpendiculaire au motif. Avec une telle configuration, on améliore l'absorption des rayons lumineux incidents par la cavité.

On notera également que les cavités du motif ont une profondeur au moins égale à 0,1 mm. Préférentiellement, la profondeur des cavités est supérieure ou égale à 0,2 mm et inférieure ou égale à 0,6 mm.

La **figure 6** présente un élément de moule 25 et un marquage 26 formé sur cet élément de moule. Ce marquage est apte à mouler le motif de la **figure 4**. Ce marquage comprend une pluralité de protubérances 27 faisant saillie à partir de l'élément de moule 25 et des parties intermédiaires 29 séparant les protubérances 27. Les protubérances 27 sont réparties dans le motif selon une densité au moins égale à cinq protubérances par millimètre carré et ces protubérances présentent des bases 31 en contact avec l'élément de moule. Chaque base a ici une forme globalement circulaire présentant un diamètre compris entre 0,03 mm et 0,5 mm. On sélectionne alors la densité des protubérances et/ou le diamètre de leur base dans ces plages de valeurs de sorte à ce que ces protubérances occupent au moins 60 % du marquage. Dans des modes de réalisation préférentiels, les protubérances occupent au moins 70%, 80%, 90%, voire 95% du marquage.

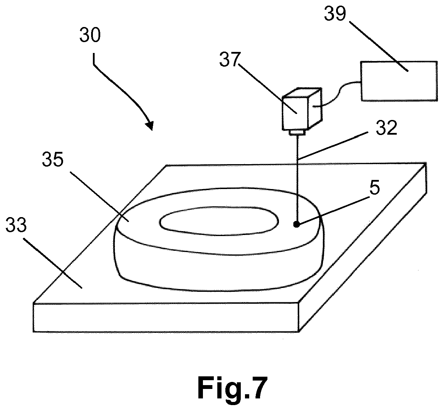

La **figure 7** présente un dispositif 30 pour la réalisation d'un motif 5 sur un flanc de pneumatique. Ce dispositif comprend un plateau 33 destiné à recevoir un pneumatique 35, de moyens lasers 37 aptes à graver le marquage sur le pneumatique par un rayon laser 32 et des moyens de contrôle 39 de ces moyens lasers. A titre exemplatif, les moyens lasers comprennent un laser à impulsions de marque IPG d'une puissance de 50W.

Le dispositif 30 permet de mettre en oeuvre un procédé pour la réalisation d'un motif faisant contraste par rapport au flanc du pneumatique. Une première étape de ce procédé comprend la mise en place du pneumatique sur le plateau 33. On vient ensuite placer les moyens lasers 37 par rapport à ce pneumatique et on vient graver le motif sur le flanc. Plus particulièrement, les moyens lasers viennent former une pluralité de cavités dans la profondeur du flanc. De par le procédé utilisé, ces cavités débouchent sur la surface extérieure du flanc faisant face aux moyens lasers en formant des ouvertures. Ces ouvertures sont séparées par des zones intermédiaires non gravées. Les ouvertures ont une densité au moins égale à cinq ouvertures par millimètre carré (mm²) et elles présentent des diamètres équivalents compris entre 0,03 mm et 0,5mm. Les moyens lasers sont configurés de sorte à ce que les ouvertures formées par le rayon laser occupent au moins 60% du motif. Dans des modes de réalisation préférentiels, les ouvertures occupent au moins 70%, 80%, 90%, voire 95% du motif.

Avec un tel procédé, il est possible de réaliser un motif robuste faisant contraste par rapport à un flanc d'un pneumatique et ceci après la vulcanisation de ce pneumatique. Cela permet notamment une personnalisation plus importante du pneumatique sans avoir besoin de proposer de nouveaux éléments de moule adaptés à ce motif, éléments toujours coûteux à fabriquer.

L'invention n'est pas limitée aux exemples décrits et représentés et diverses modifications peuvent y être apportées sans sortir de son cadre.

## Revendications

1. Pneumatique en matériau caoutchoutique comprenant un flanc (3) et un motif (5) formé sur ce flanc, ce motif comprenant une pluralité d'ouvertures (7) et des zones intermédiaires (9) séparant ces ouvertures, et pour que le motif fasse contraste avec le flanc, les ouvertures (7) occupent au moins 60% du motif, ces ouvertures étant réparties dans le motif selon une densité au moins égale à cinq ouvertures par millimètre carré (mm²), ces ouvertures présentant des diamètres équivalents compris entre 0,03 mm et 0,5 mm, **caractérisé en ce que** les ouvertures sont circulaires et **en ce que** ces ouvertures se prolongent dans la profondeur du flanc pour former des cavités (13), et tout ou partie de ces cavités a une section qui diminue dans la profondeur de ce flanc et **en ce que** tout ou partie des cavités (13) a une profondeur comprise entre 0,2 mm et 0,6 mm.

2. Pneumatique selon la revendication 1, dans lequel les ouvertures occupent au moins 70% du motif.

3. Pneumatique selon l'une quelconque des revendications 1 à 2, dans lequel les ouvertures occupent au moins 80% du motif.

4. Pneumatique selon l'une quelconque des revendications 1 à 3, dans lequel les ouvertures occupent au moins 90% du motif.

5. Pneumatique selon l'une quelconque des revendications 1 à 4, dans lequel les ouvertures occupent au moins 95% du motif.

6. Pneumatique selon l'une quelconque des revendications 1 à 5, dans lequel tout ou partie des cavités a au moins une paroi (14), qui selon une vue en coupe, forme un angle α compris entre 10° et 45°, par rapport à une direction Z perpendiculaire au motif.

## Patentansprüche

1. Reifen aus Kautschukmaterial, umfassend eine Seitenfläche (3) und ein Motiv (5), das auf dieser Seitenfläche ausgebildet ist, wobei dieses Motiv eine Vielzahl von Öffnungen (7) und Zwischenzonen (9), die diese Öffnungen trennen, umfasst, und, damit das Motiv einen Kontrast zu der Seitenfläche bildet, die Öffnungen (7) mindestens 60 % des Motivs einnehmen, wobei diese Öffnungen in dem Motiv mit einer Dichte mindestens gleich fünf Öffnungen pro Quadratmillimeter (mm²) verteilt sind, wobei diese Öffnungen gleichwertige Durchmesser zwischen 0,03 mm und 0,5 mm aufweisen, **dadurch gekennzeichnet, dass** die Öffnungen kreisförmig sind und dass sich diese Öffnungen in die Tiefe der Seitenfläche verlängern, um Hohlräume (13) zu bilden, und die Gesamtheit oder ein Teil dieser Hohlräume einen Querschnitt hat, der in der Tiefe dieser Seitenfläche abnimmt und dass die Gesamtheit oder ein Teil der Hohlräume (13) eine Tiefe zwischen 0,2 mm und 0,6 mm hat.

2. Reifen nach Anspruch 1, bei dem die Öffnungen mindestens 70 % des Motivs einnehmen.

3. Reifen nach einem der Ansprüche 1 bis 2, bei dem die Öffnungen mindestens 80 % des Motivs einnehmen.

4. Reifen nach einem der Ansprüche 1 bis 3, bei dem die Öffnungen mindestens 90 % des Motivs einnehmen.

5. Reifen nach einem der Ansprüche 1 bis 4, bei dem die Öffnungen mindestens 95 % des Motivs einnehmen.

6. Reifen nach einem der Ansprüche 1 bis 5, bei dem die Gesamtheit oder ein Teil der Hohlräume mindestens eine Wand (14) hat, die in einer Schnittansicht einen Winkel α zwischen 10° und 45° in Bezug zu einer Z-Richtung senkrecht auf das Motiv bildet.

## Claims

1. Tyre made of rubbery material comprising α sidewall (3) and α pattern (5) formed on this sidewall, this pattern comprising α plurality of openings (7) and intermediate zones (9) separating these openings, and in order for the pattern to contrast with the sidewall, the openings (7) occupy at least 60% of the pattern, these openings being distributed through the pattern at α density at least equal to five openings per square millimetre (mm²), these openings having equivalent diameters of between 0.03 mm and 0.5 mm, **characterized in that** the openings are circular and **in that** these openings extend into the depth of the sidewall to form cavities (13), and all or some of these cavities have α cross section that decreases into the depth of this sidewall and **in that** all or some of the cavities (13) have α depth of between 0.2 mm and 0.6 mm.

2. Tyre according to Claim 1, in which the openings occupy at least 70% of the pattern.

3. Tyre according to either one of Claims 1 and 2, in which the openings occupy at least 80% of the pattern.

4. Tyre according to any one of Claims 1 to 3, in which the openings occupy at least 90% of the pattern.

5. Tyre according to any one of Claims 1 to 4, in which the openings occupy at least 95% of the pattern.

6. Tyre according to any one of Claims 1 to 5, in which all or some of the cavities have at least one wall (14) which, when viewed in cross section, forms an angle α of between 10° and 45° with respect to α direction Z perpendicular to the pattern.
